# EUROPÄISCHE PATENTANMELDUNG

(11) **EP 4 006 656 A1**
(43) Veröffentlichungstag der Anmeldung: **01.06.2022**
(21) Anmeldenummer: 20210299.2
(22) Anmeldetag: 27.11.2020
(51) Int. Cl.: G05B 13/04, G05B 17/02, E03B 7/02, E03B 7/07

(54) **STEUERUNG EINES WASSERVERSORGUNGSSYSTEMS**

(71) Anmelder: Siemens Aktiengesellschaft, 80333 München (DE)
(72) Erfinder: Held, Harald, 85461 Bockhorn (DE); Hülsmann, Guido, 90562 Heroldsberg (DE); Sohr, Annelie, 81929 München (DE)

(57) **Zusammenfassung**

Die Erfindung betrifft ein Verfahren zur Steuerung einer Druck- und Flussverteilung eines Wasserversorgungssystems, das eine Vielzahl von Pumpstationen umfasst, mit den Verfahrensschritten:
(a) Einlesen eines computergestützten Hydraulikmodells (HM) des Wasserversorgungssystems, wobei das Hydraulikmodell eine zeitabhängige Druck- und Flussverteilung des Wasserversorgungssystems abbildet,
(b) Ermitteln von ressourcenoptimierten Druck- und Flusssollwerten ((D1, F1) ,..., (Di, Fi) ,..., (Dn,Fn)) für die Pumpstationen (P1, ..., Pn) des Wasserversorgungssystems für einen vorgegebenen Prognosezeitraum anhand des computergestützten Hydraulikmodells (HM) mittels eines ersten Optimierungsverfahrens (OPT1),
(c) Einlesen eines Pumpenmodells (PM) für eine Pumpstation (Pi), wobei das Pumpenmodell ein Betriebsverhalten von Pumpvorrichtungen der Pumpstation (Pi) abbildet,
(d) Ermitteln von ressourcenoptimierten Betriebsparametern für die Pumpvorrichtungen der Pumpstation (Pi) anhand des Pumpenmodells (PM) zu einem vorgegebenen Zeitpunkt mittels eines zweiten Optimierungsverfahrens (OPT2) in Abhängigkeit des Druck- und Flusssollwerts dieser Pumpstation für den vorgegebenen Zeitpunkt,
und
(e) Ausgeben der ressourcenoptimierten Betriebsparametern (Ri) zum Steuern der Pumpvorrichtungen der Pumpstation (Pi).

Das Verfahren ermöglicht insbesondere einen energieeffizienten und sicheren Betrieb des Wasserversorgungssystems zu optimieren, wobei die Optimierung auf zwei Ebenen durchgeführt wird.

## Beschreibung

Die Erfindung betrifft ein computerimplementiertes Verfahren und eine Vorrichtung zur Steuerung einer Druck- und Flussverteilung eines Wasserversorgungssystems sowie ein Computerprogrammprodukt zur Durchführung des Verfahrens.

Ein Betrieb eines Wasserversorgungssystems, wie z.B. eines Wassernetzwerks oder einer Pipeline, benötigt Entscheidungen über den Betrieb auf verschiedenen Ebenen. Auf der Netzwerk- bzw. Systemebene wird in der Regel durch eine zentrale Instanz vorgegeben, welche Pumpstation des Wasserversorgungssystems welchen Druck ausgangsseitig aufbauen soll, um die gewünschte Flussverteilung im Wasserversorgungssystem zu erzielen. Dabei sind insbesondere die Anforderungen an die Tanks bezüglich der zulässigen Wasserstände, an das Gesamtsystem bezüglich der zulässigen Druckverteilungen, an die Pumpstationen bezüglich der zulässigen Energieverbräuche berücksichtigt werden, und/oder die prognostizierte Wasserabnahmen durch die Verbraucher zu bedienen. Änderungen der Wasserstände in Tanks beeinflussen dabei wiederum das Druck- und/oder Flussverhalten des Gesamtsystems. Auf Ebene der einzelnen Pumpstationen ist insbesondere zu entscheiden, welche Pumpen dann tatsächlich betrieben werden sollen und mit welcher Geschwindigkeit, um den geforderten Ausgangsdruck aufzubauen. Typischerweise wird ein Wasserversorgungssystems manuell oder regelbasiert betrieben. Dies kann allerdings ressourcenintensiv sein.

Es ist daher eine Aufgabe der Erfindung, eine Steuerung eines Wasserversorgungssystems zu verbessern.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zur Steuerung einer Druck- und Flussverteilung eines Wasserversorgungssystems, das eine Vielzahl von Pumpstationen umfasst, mit den Verfahrensschritten:
(a) Einlesen eines computergestützten Hydraulikmodells des Wasserversorgungssystems, wobei das computergestützte Hydraulikmodell eingerichtet ist, eine zeitabhängige Druck- und Flussverteilung des Wasserversorgungssystems abzubilden,
(b) Ermitteln von ressourcenoptimierten Druck- und Flusssollwerten für die Pumpstationen des Wasserversorgungssystems für einen vorgegebenen Prognosezeitraum anhand des computergestützten Hydraulikmodells mittels eines ersten Optimierungsverfahrens,
(c) Einlesen eines Pumpenmodells für eine Pumpstation, wobei das Pumpenmodell eingerichtet ist, ein Betriebsverhalten von Pumpvorrichtungen der Pumpstation abzubilden,
(d) Ermitteln von ressourcenoptimierten Betriebsparametern für die Pumpvorrichtungen der Pumpstation anhand des Pumpenmodells zu einem vorgegebenen Zeitpunkt mittels eines zweiten Optimierungsverfahrens in Abhängigkeit des Druck- und Flusssollwerts dieser Pumpstation für den vorgegebenen Zeitpunkt, und
(e) Ausgeben der ressourcenoptimierten Betriebsparametern zum Steuern der Pumpvorrichtungen der Pumpstation.

Unter "rechnergestützt" oder "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.
Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter einem "Wasserversorgungssystem" kann insbesondere ein Wasserversorgungsnetz oder eine Pipeline verstanden werden. Das Wasserversorgungssystem umfasst insbesondere eine Vielzahl von Pumpstationen, die wiederum eine Vielzahl von Pumpen/Pumpvorrichtungen umfassen, und eine Vielzahl von Tanks bzw. Behältern. Die Werte der Flüsse und Drücke im Wasserversorgungssystem verändern sich insbesondere durch die Entnahmen durch Verbraucher und durch Befüllen der Tanks, wobei aber Grenzwertfüllstände eingehalten werden sollen.

Unter einem "Hydraulikmodell" kann insbesondere ein computergestütztes Modell verstanden werden, das eine zeitabhängige Druck- und Flussverteilung des Wasserversorgungssystems in Abhängigkeit vom Betrieb des Systems abbildet. Insbesondere kann mittels des Hydraulikmodells das Betriebsverhalten der Pumpstationen und Behälteranlagen, die Entnahmen aus dem System (durch die Verbraucher) und/oder die Einspeisungen aus Reservoirs abgebildet werden. Das Hydraulikmodell umfasst insbesondere Modelle für alle relevanten Komponenten des Wasserversorgungssystems, wie z.B. Rohre, Behälter, Abnehmer, Reservoirs, Ventile, Pumpstationen. Das Hydraulikmodell umfasst vorzugsweise einfache Ersatzmodelle, um jeweilige Pumpstationen zu modellieren und um eine Optimierung der Druck- und Flussverteilung des Wasserversorgungssystems zu beschleunigen. Ein Ersatzmodell kann beispielsweise ein Regressionsmodell sein. Die Pumpstationen bzw. deren Pumpeffizienz/verhalten werden somit nicht im Detail modelliert.

Unter "ressourcenoptimierten Druck- und Flusssollwerten" können im Zusammenhang mit der Erfindung insbesondere Druck- und Flusswerte für eine Pumpstation verstanden werden, für deren Einhaltung die Pumpstation energieeffizient/mit minimaler Energie und/oder kosteneffizient/kostengünstig betrieben wird.

Unter einem "Optimierungsverfahren" kann im Zusammenhang mit der Erfindung insbesondere ein computergestütztes Optimierungsverfahren verstanden werden. Es können insbesondere bekannte Optimierungsverfahren genutzt werden.

Unter einem "Pumpenmodell" kann insbesondere eine Pumpenkurve oder Pumpenkennlinie, die das Betriebsverhaltens einer Pumpvorrichtung beschreibt. Das Pumpenmodell beschreibt insbesondere die Charakteristiken einer Pumpe bzgl. Hydraulik und Effizienz. Eine Pumpenkennlinie repräsentiert beispielsweise das Verhältnis zwischen einer Förderhöhe und einem Förderstrom.

Unter einem "Betriebsparameter" für eine Pumpvorrichtung kann beispielsweise ein Betriebszustand, wie z.B. "An"/"Aus" (an-/ausgeschaltet), und/oder eine Geschwindigkeit, mit der die Pumpvorrichtung betrieben wird, verstanden werden.

Es ist ein Vorteil der vorliegenden Erfindung, einen energie- und/oder kosteneffizienten Betrieb des Wasserversorgungssystems zu ermöglichen. Es werden mittels eines ersten Optimierungsverfahrens auf einer oberen/ersten Optimierungsebene optimierte Druck- und Flusswerte für einzelne Pumpstationen des Wasserversorgungssystems bestimmt. Diese erste Optimierung erfolgt vorzugsweise für einen vorgegebenen Prognosezeitraum. Nachfolgend wird auf einer unteren/zweiten Optimierungsebene mittels eines zweiten Optimierungsverfahrens ein ressourcenoptimierter Betrieb der einzelnen Pumpvorrichtungen der jeweiligen Pumpstationen in Abhängigkeit der vorab ermittelten optimierten Druck- und Flusswerte der jeweiligen Pumpstation bestimmt. Diese zweite Optimierung erfolgt vorzugsweise zu einem aktuellen Zeitpunkt. Insbesondere kann bei der zweiten Optimierung zunächst ermittelt werden, welche Pumpvorrichtungen einer Pumpstation betrieben werden sollen.

Das Optimierungsproblem wird somit auf zwei Ebenen gelöst. Außerdem können die Pumpstationen des Wasserversorgungssystems beim ersten Optimierungsschritt weniger detailliert/grob modelliert werden, wie z.B. durch Ersatzmodelle. Eine detaillierte Modellierung erfolgt im zweiten Optimierungsschritt. Somit lassen sich auf Basis einer Prognose für den Betrieb des Wasserversorgungssystems Betriebsparameter für den Betrieb der Pumpvorrichtungen einer Pumpstation zum aktuellen Zeitpunkt ermitteln.

In einer vorteilhaften Ausführungsform des computerimplementierten Verfahrens können die ressourcenoptimierten Druck- und/oder Flusssollwerte der Pumpstation als Randbedingungen für das zweite Optimierungsverfahren genutzt werden.

So kann eine Konsistenz zwischen den beiden Optimierungsebenen durch die Übergabe der Fluss- und Drucksollwerte von der oberen zur unteren Ebene erzielt werden.

In einer vorteilhaften Ausführungsform des computerimplementierten Verfahrens können die Betriebsparameter für die Pumpvorrichtungen derart ermittelt werden, dass die ressourcenoptimierten Druck- und Flusssollwerte der Pumpstation zum vorgegebenen Zeitpunkt erfüllt sind.

So kann das Ergebnis aus der ersten Optimierung genutzt werden, um das Betriebsverhalten der Pumpvorrichtungen der jeweiligen Pumpstationen im Detail zu optimieren.

In einer Ausführungsform des computerimplementierten Verfahrens können einzelne Pumpvorrichtungen der Pumpstation in Abhängigkeit des ermittelten Druck- und Flusssollwerts dieser Pumpstation selektiert werden und lediglich für die selektierten Pumpvorrichtungen ressourcenoptimierte Betriebsparameter ermittelt werden.

Vorzugsweise wird lediglich eine bestimmte Anzahl von Pumpvorrichtungen einer Pumpstation in Betrieb genommen, um einen ressourcenoptimierten Betrieb zu erzielen.

In einer vorteilhaften Ausführungsform des computerimplementierten Verfahrens können die Verfahrensschritte (c) bis (e) für jede Pumpstation des Wasserversorgungssystems durchgeführt werden.

Vorzugsweise wird die zweite Optimierung für jede Pumpstation durchgeführt, so dass ressourcenoptimierte Betriebsparameter für Pumpvorrichtungen jeder Pumpstation ermittelt werden.

In einer Ausführungsform des computerimplementierten Verfahrens können die Verfahrensschritte (b) bis (d) nach einem vorgegebenen Zeitschritt iteriert werden.

Damit kann auf dynamische Änderungen im Wasserversorgungsystem schnell reagiert werden. Für den zweiten Optimierungsschritt zu einem aktuellen oder vorgegeben Zeitpunkt wird somit eine aktuelle Prognose aus dem ersten Optimierungsschritt genutzt.

In einer Ausführungsform des computerimplementierten Verfahrens können Pumpstationen des Wasserversorgungssystems im computergestützten Hydraulikmodell des Wasserversorgungssystems mittels Ersatzmodellen abgebildet werden.

Insbesondere kann ein Betriebsverhalten, z.B. eine Pumpeffizienz, einer Pumpstation mittels Ersatzmodell abgebildet werden. Die Pumpstationen sind somit vorzugsweise auf der oberen Optimierungsebene nicht im Detail modelliert, sondern werden durch weniger komplexe Modelle abgebildet.

In einer Ausführungsform des computerimplementierten Verfahrens kann das Pumpenmodell Pumpenkennlinien der Pumpvorrichtungen umfassen.

In einer Ausführungsform des computerimplementierten Verfahrens kann mittels eines zweiten Optimierungsverfahrens ein Effizienzwert der Pumpstation ermittelt werden.

In einer Ausführungsform des computerimplementierten Verfahrens kann das computergestützte Hydraulikmodell anhand des Effizienzwerts der Pumpstation aktualisiert und zur Ermittlung der ressourcenoptimierten Druck- und Flusssollwerte für die Pumpstationen des Wasserversorgungssystems genutzt werden.

So kann das Hydraulikmodell in Abhängigkeit der Ergebnisse des zweiten Optimierungsverfahrens aktualisiert werden. Insbesondere kann ein Regressionsmodell einer jeweiligen Pumpstation derart aktualisiert werden. Damit kann außerdem eine Konsistenz zwischen den beiden Optimierungsebenen erzielt werden.

In einer Ausführungsform des computerimplementierten Verfahrens können die Pumpvorrichtungen der Pumpstation mittels der ressourcenoptimierten Betriebsparameter gesteuert werden.

Gemäß einem zweiten Aspekt betrifft die Erfindung eine Vorrichtung zur Steuerung einer Druck- und Flussverteilung eines Wasserversorgungssystems, das eine Vielzahl von Pumpstationen umfasst, umfassend
- eine erste Schnittstelle, die derart eingerichtet ist, ein computergestütztes Hydraulikmodell des Wasserversorgungssystems einzulesen, wobei das computergestützte Hydraulikmodell eingerichtet ist, eine zeitabhängige Druck- und Flussverteilung des Wasserversorgungssystems abzubilden,
- ein erstes Optimierungsmodul, das derart eingerichtet ist, ressourcenoptimierte Druck- und Flusssollwerte für die Pumpstationen des Wasserversorgungssystems für einen vorgegebenen Prognosezeitraum anhand des computergestützten Hydraulikmodells mittels eines ersten Optimierungsverfahrens zu ermitteln,
- eine zweite Schnittstelle, die derart eingerichtet ist, ein Pumpenmodell für eine Pumpstation einzulesen, wobei das Pumpenmodell eingerichtet ist, ein Betriebsverhalten von Pumpvorrichtungen der Pumpstation abzubilden,
- ein zweites Optimierungsmodul, das derart eingerichtet ist, ressourcenoptimierte Betriebsparameter für die Pumpvorrichtungen der Pumpstation anhand des Pumpenmodells zu einem vorgegebenen Zeitpunkt mittels eines zweiten Optimierungsverfahrens in Abhängigkeit des Druck- und Flusssollwerts dieser Pumpstation für den vorgegebenen Zeitpunkt, zu ermitteln, und
- ein Ausgabemodul, das derart eingerichtet ist, die ressourcenoptimierten Betriebsparameter zum Steuern der Pumpvorrichtungen der Pumpstation auszugeben.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1:: ein Ausführungsbeispiel des erfindungsgemäßen Verfahrens;
- Fig. 2:: ein weiteres Ausführungsbeispiel des erfindungsgemäßen Verfahrens; und
- Fig. 3:: ein Ausführungsbeispiel der erfindungsgemäßen Vor richtung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

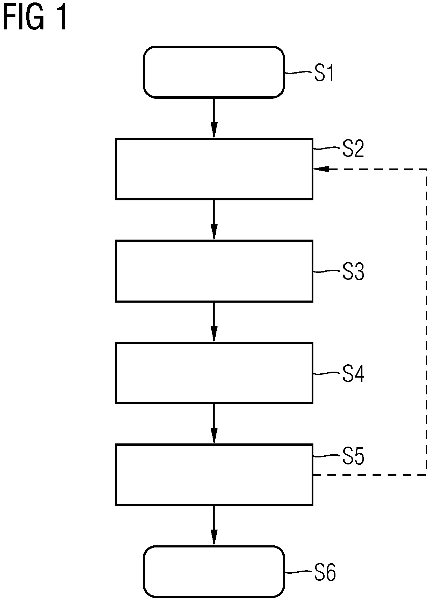

Figur 1 zeigt ein Ausführungsbeispiel des erfindungsgemäßen Verfahrens zur Steuerung einer Druck- und Flussverteilung eines Wasserversorgungssystems als Flussdiagramm. Das Wasserversorgungssystem umfasst eine Vielzahl von Pumpstationen, die jeweils eine Vielzahl von Pumpen/Pumpvorrichtungen umfassen, und Behälter, um Druck und Fluss im gesamten System so zu regulieren, so dass der Druck und Fluss beim Verbraucher Sollwerte erfüllt.

Im ersten Schritt S1 des Verfahrens wird ein computergestütztes Hydraulikmodell des Wasserversorgungssystems eingelesen. Das computergestützte Hydraulikmodell bildet eine zeitabhängige Druck- und Flussverteilung des Wasserversorgungssystems ab. Vorzugsweise umfasst das Hydraulikmodell jeweils Ersatzmodelle, auch als Effizienzmodelle bezeichnet, der jeweiligen Pumpstationen des Wasserversorgungssystems. Mit diesen Ersatzmodellen kann das Betriebsverhalten der Pumpstationen abgebildet werden. Ein Ersatzmodell kann beispielsweise ein Regressionsmodell sein.

Im nächsten Schritt S2 des Verfahrens werden anhand des Hydraulikmodells und mittels eines ersten Optimierungsverfahrens ressourcenoptimierte Druck- und Flusssollwerte für die Pumpstationen des Wasserversorgungssystems für einen vorgegebenen Prognosezeitraum ermittelt. Somit wird hierbei ein längerer Zeitraum betrachtet, um beispielsweise die Nutzung der Behälter korrekt abzubilden. Die Behälter stellen eine Speicherkapazität dar, die es erlaubt die Bereitstellung des Wassers und dessen Abnahme durch die Verbraucher zeitlich zu entkoppeln. Nur so können Verbrauchsspitzen abgefangen werden. Bei variablen Energiepreisen kann zudem das Pumpen in kostengünstigere Zeitfenster verschoben werden.

In anderen Worten, es wird, vorzugsweise ausgehend von einem aktuellen Zeitpunkt, für einen vorgegebenen Zeitraum, die Fluss- und Druckverteilung für das Wasserversorgungssystem anhand des Hydraulikmodells optimiert. Die ermittelten zeitaufgelöste Druck- und Flusssollwerte für die Pumpstationen des Wasserversorgungssystems werden ausgegeben.

Im nächsten Schritt S3 wird mindestens ein Pumpenmodell für mindestens eine Pumpstation eingelesen. Vorzugsweise wird für jede Pumpstation des Wasserversorgungssystem ein entsprechendes Pumpmodell eingelesen. Ein jeweilige Pumpmodell ist eingerichtet, ein Betriebsverhalten von Pumpvorrichtungen/Pumpen der Pumpstation abzubilden. Ein Pumpmodell kann beispielsweise eine Pumpenkennlinie bzw. Pumpenkurve für eine Pumpvorrichtung umfassen.

Im nächsten Schritt S4 werden für einen vorgegebenen Zeitpunkt ressourcenoptimierte Betriebsparameter für die Pumpvorrichtungen der Pumpstation anhand des Pumpmodells mittels eines zweiten Optimierungsverfahrens in Abhängigkeit des Druck- und Flusssollwerts dieser Pumpstation für den vorgegebenen Zeitpunkt ermittelt. Das zweite Optimierungsverfahren kann dabei beispielsweise auch gleich dem ersten Optimierungsverfahren sein. Vorzugsweise werden die ressourcenoptimierten Betriebsparameter zu einem aktuellen Zeitpunkt bestimmt. Dazu werden vorzugsweise die ressourcenoptimierten Druck- und/oder Flusssollwerte der betrachteten Pumpstation als Randbedingung für das zweite Optimierungsverfahren genutzt. Somit können die Berechnungsergebnisse aus dem ersten Optimierungsschritt S2 für die detaillierte Optimierung des Betriebsverhaltens der einzelnen Pumpen einer Pumpstation genutzt werden. Insbesondere werden die Betriebsparameter für die Pumpvorrichtungen derart ermittelt, dass die vorab ermittelten, ressourcenoptimierten Druck- und Flusssollwerte der jeweiligen Pumpstation zum vorgegebenen Zeitpunkt erfüllt sind.

Im nächsten Schritt S5 werden die ressourcenoptimierten Betriebsparameter zum Steuern der Pumpvorrichtungen der jeweiligen Pumpstation, und somit zum Steuern des Wasserversorgungssystems, ausgegeben.

Die Schritte S3 bis S5 des Verfahrens werden vorzugsweise für jede Pumpstation des Wasserversorgungssystems durchgeführt. Insbesondere kann hierbei jeweils bestimmt werden, welche der Pumpvorrichtungen der jeweiligen Pumpstation aktiviert werden soll. In anderen Worten können einzelne Pumpvorrichtungen einer Pumpstation in Abhängigkeit des ermittelten Druck- und Flusssollwerts dieser Pumpstation selektiert werden und lediglich für die selektierten Pumpvorrichtungen ressourcenoptimierte Betriebsparameter ermittelt werden.

Außerdem können das Hydraulikmodell bzw. die Ersatzmodellen/Effizienzmodellen mittels der Optimierungsergebnisse aus den Schritten S3 bis S5 aktualisiert werden, um diese an ein dynamisches Verhalten des Wasserversorgungssystems anzupassen.

Die Verfahrensschritte S2 bis S5 können insbesondere für einen nachfolgenden Prognosezeitraum nach einem vorgegeben Zeitschritt wiederholt werden.

Im nächsten Schritt S6 des Verfahrens können die Pumpvorrichtungen der Pumpstationen gemäß der ermittelten ressourcenoptimierten Betriebsparameter gesteuert werden. Bei einer erneuten Iteration der Verfahrensschritte S2 bis S5 können demnach aktualisierte Betriebsparameter ausgegeben werden.

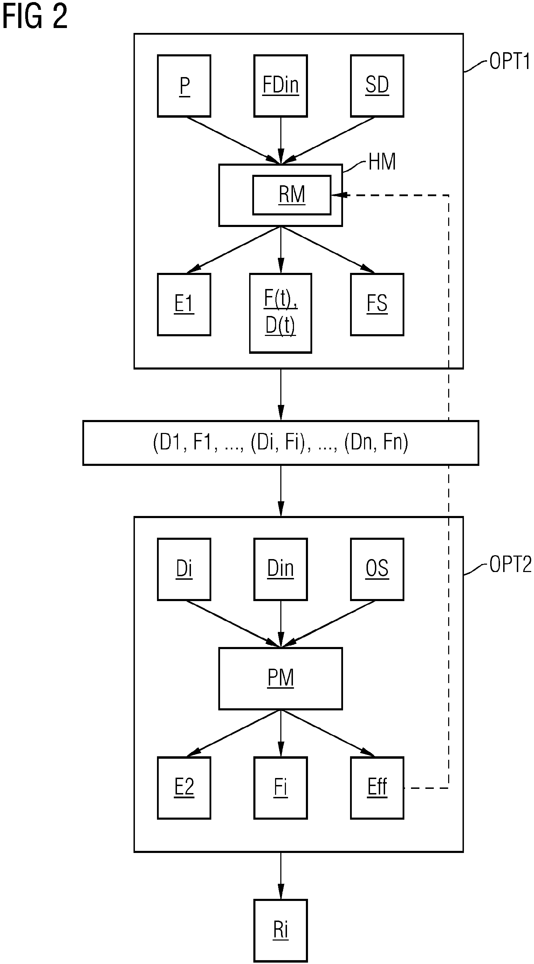

Figur 2 zeigt ein weiteres Ausführungsbeispiel des erfindungsgemäßen Verfahrens zur Steuerung einer Druck- und Flussverteilung eines Wasserversorgungssystems in Blockdarstellung.

Das Verfahren umfasst zwei Optimierungsebenen. Auf der ersten Optimierungsebene werden mittels eines ersten Optimierungsverfahrens OPT1 optimierte Druck- und Flusssollwerte ((D1, F1, ..., (Di, Fi), ..., (Dn, Fn) ) für i = 1, ..n Pumpstationen des Wasserversorgungssystems ermittelt. Das Optimierungsverfahren OPT1 wird dazu auf ein computergestütztes Hydraulikmodell HM, das eine Fluss- und Druckverteilung im Wasserversorgungssystem abbildet, angewandt.

Dem Hydraulikmodell HM werden dafür zeit- und ortsaufgelöste Prognosewerte P von Entnahmen/Verbrauchern übergeben. Außerdem werden zeitaufgelöste Flusswerte und Ausgangsdrücke FDin der Pumpstationen des Wasserversorgungssystems und aktuelle Zustandsdaten SD von Behältern und zum Startzeitpunkt der Prognose, wie z.B. Füllstände von Reservoirs, dem Hydraulikmodell HM übergeben.

Das Hydraulikmodell HM umfasst mindestens ein Regressionsmodell RM einer Pumpstation des Wasserversorgungssystems, wobei das Regressionsmodell RM die Effizienz der Pumpstation beschreibt.

Mit dem Hydraulikmodell HM können für einen vorgegebenen Prognosezeitraum zeitaufgelöste Flüsse F(t) und Drücke D(t) im Wasserversorgungssystems, den Energiebedarf E1 für die Regulierung der Flüsse und Drücke und Behälterfüllstände FS ermittelt werden. In anderen Worten, das Hydraulikmodell HM umfasst das dynamische Verhalten des Wasserversorgungssystems über den Prognosezeitraum.

Anhand des Hydraulikmodells HM werden mittels des ersten Optimierungsverfahrens OPT1 ressourcenoptimierte Druck- und Flusssollwerte ((D1, F1, ..., (Di, Fi), ..., (Dn, Fn) ) für die jeweiligen Pumpstationen des Wasserversorgungssystems für den vorgegebenen Prognosezeitraum berechnet. Dafür werden die Flüsse und Ausgangsdrücke der Pumpstationen, d.h. die Optimierungsvariablen, im Prognosezeitraum so bestimmt, dass die Flüsse und Drücke im Wasserversorgungssystem zu allen Zeitpunkten Beschränkungen einhalten (Randbedingungen der Optimierung) sowie Behälterfüllstände in vorgegebenen Grenzen bleiben, und der Energiebedarf und/oder die Kosten optimal sind. Der Energiebedarf und/oder die Kosten sind demnach die Zielfunktion dieser Optimierung.

Die so ermittelten Druck- und Flusssollwerte ((D1, F1, ..., (Di, Fi), ..., (Dn, Fn) ) für die jeweiligen Pumpstationen des Wasserversorgungssystems werden für die zweite Optimierung bereitgestellt. Der zweite Optimierungsschritt wird vorzugsweise für jede Pumpstation durchgeführt. Vorzugsweise wird der zweite Optimierungsschritt für einen aktuellen Zeitpunkt und/oder den Zeitpunkt, für den eine konkrete Steuerungsentscheidung bezüglich des Betriebs der Pumpen ansteht, durchgeführt.

Für jede Pumpstation (i=1, ..., n) wird ein Pumpenmodell PM bereitgestellt, dass beispielsweise mindestens eine Pumpenkennlinie für eine Pumpe umfasst. Dem Pumpenmodell PM wird der Drucksollwert Di, der im vorhergehenden Optimierungsschritt für diese Pumpstation bestimmt wurde, als Ausgangsdruck für den betrachteten Zeitpunkt übergeben. Außerdem wird dem Pumpenmodell PM ein Eingangsdruck Din der Pumpen der Pumpstation und Informationen über den Betriebszustand OS der Pumpen übergeben. Mittels des Pumpenmodells kann ein Fluss, Energiebedarf E2 und ein Effizienzwert Eff der Pumpstation ermittelt werden.

Mittels des zweiten Optimierungsverfahrens OPT2 kann ein Betriebszustand der Pumpen (Optimierungsvariable) derart bestimmt werden, dass ein Flusswert mindestens den Flusssollwert Fi der Pumpstation aus dem ersten Optimierungsschritt für den betrachteten Zeitpunkt erzielt und dabei der Energiebedarf dieser Pumpstation optimal ist. In anderen Worten, der Flusssollwert Fi aus dem ersten Optimierungsschritt ist hier Randbedingung der zweiten Optimierung OPT2. Aus dem derart ermittelten Betriebszustand können Betriebsparameter Ri für die jeweilige Pumpstation abgeleitet und für die Steuerung der Pumpstation bereitgestellt werden. Außerdem kann der ermittelte Effizienzwert Eff zur Aktualisierung des Regressionsmodells RM für die entsprechende Pumpstation genutzt werden, um dieses an das dynamische Betriebsverhalten des Wasserversorgungssystems anzupassen.

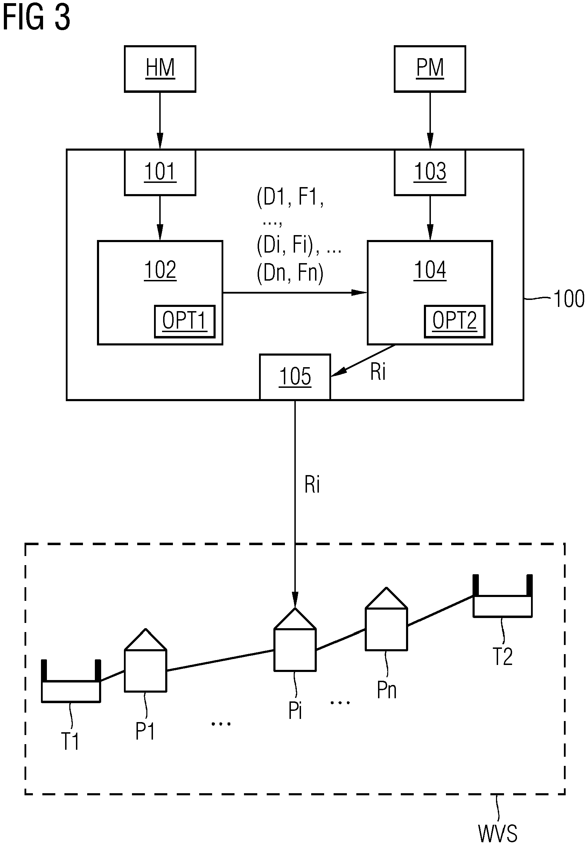

Figur 3 zeigt ein Ausführungsbeispiel der erfindungsgemäßen Vorrichtung 100 zur Steuerung einer Druck- und Flussverteilung eines Wasserversorgungssystems WVS, wie z.B. eine Pipeline. Das Wasserversorgungssystem umfasst eine Vielzahl von Pumpstationen PS1, ..., PSi, ..., PSn und mehrere Tanks T1, T2. Die Vorrichtung 100 ist insbesondere derart eingerichtet, die Schritte eines erfindungsgemäßen Verfahrens, wie beispielhaft anhand der Figuren 1 und 2 erläutert, auszuführen. Die Vorrichtung und/oder ihre Module können insbesondere in Software und/oder Hardware ausgestaltet sein.

Die Vorrichtung 100 umfasst eine erste Schnittstelle 101, die derart eingerichtet ist, ein computergestütztes Hydraulikmodell HM des Wasserversorgungssystems WVS einzulesen, wobei das computergestützte Hydraulikmodell HM eingerichtet ist, eine zeitabhängige Druck- und Flussverteilung des Wasserversorgungssystems abzubilden.

Die Vorrichtung 100 umfasst weiter ein erstes Optimierungsmodul 102, das derart eingerichtet ist, ressourcenoptimierte Druck- und Flusssollwerte (D1, F1),..., (Di,Fi),..., (Dn,Fn) für die Pumpstationen P1, ..., Pn des Wasserversorgungssystems für einen vorgegebenen Prognosezeitraum anhand des computergestützten Hydraulikmodells HM mittels eines ersten Optimierungsverfahrens OPT1 zu ermitteln.

Die Vorrichtung 100 umfasst weiter eine zweite Schnittstelle 103, die derart eingerichtet ist, ein Pumpenmodell PM, wie z.B. eine Pumpenkennlinie, für jede Pumpstation P1, ..., Pn, einzulesen. Dabei ist das jeweilige Pumpenmodell PM eingerichtet, ein Betriebsverhalten von Pumpvorrichtungen der jeweiligen Pumpstation abzubilden, d.h. für jede Pumpstation kann insbesondere ein anderes Pumpenmodell eingelesen werden.

Die Vorrichtung 100 umfasst weiter ein zweites Optimierungsmodul 104, das derart eingerichtet ist, ressourcenoptimierte Betriebsparameter Ri für die Pumpvorrichtungen jeder Pumpstation anhand des Pumpenmodells PM zu einem vorgegebenen Zeitpunkt mittels eines zweiten Optimierungsverfahrens OPT2 in Abhängigkeit des Druck- und Flusssollwerts dieser Pumpstation für den vorgegebenen Zeitpunkt, zu ermitteln. In Figur 3 wird beispielhaft die Optimierung für die Pumpstation Pi gezeigt.

Die ressourcenoptimierten Betriebsparameter Ri für die Pumpstation Pi wird von einem Ausgabemodul 105 der Vorrichtung 100 zum Steuern der Pumpvorrichtungen der Pumpstation ausgeben.

Beispielsweise können die ressourcenoptimierten Betriebsparameter an eine Steuerungseinheit des Wasserversorgungssystems übermittelt werden, um die Pumpen entsprechend zu steuern.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zur Steuerung einer Druck- und Flussverteilung eines Wasserversorgungssystems (WVS), das eine Vielzahl von Pumpstationen umfasst, mit den Verfahrensschritten:
(a) Einlesen (S1) eines computergestützten Hydraulikmodells (HM) des Wasserversorgungssystems, wobei das computergestützte Hydraulikmodell eingerichtet ist, eine zeitabhängige Druck- und Flussverteilung des Wasserversorgungssystems abzubilden,
(b) Ermitteln (S2) von ressourcenoptimierten Druck- und Flusssollwerten ((D1, F1),..., (Di,Fi),..., (Dn,Fn)) für die Pumpstationen (P1, ..., Pn) des Wasserversorgungssystems für einen vorgegebenen Prognosezeitraum anhand des computergestützten Hydraulikmodells (HM) mittels eines ersten Optimierungsverfahrens (OPT1),
(c) Einlesen (S3) eines computergestützten Pumpenmodells (PM) für eine Pumpstation (Pi), wobei das Pumpenmodell eingerichtet ist, ein Betriebsverhalten von Pumpvorrichtungen der Pumpstation (Pi) abzubilden,
(d) Ermitteln (S4) von ressourcenoptimierten Betriebsparametern (Ri) für die Pumpvorrichtungen der Pumpstation (Pi) anhand des computergestützten Pumpenmodells (PM) zu einem vorgegebenen Zeitpunkt mittels eines zweiten Optimierungsverfahrens (OPT2) in Abhängigkeit des Druck- und Flusssollwerts dieser Pumpstation für den vorgegebenen Zeitpunkt,
und
(e) Ausgeben (S5) der ressourcenoptimierten Betriebsparametern (Ri) zum Steuern der Pumpvorrichtungen der Pumpstation (Pi) .

2. Computerimplementiertes Verfahren nach Anspruch 1, wobei die ressourcenoptimierten Druck- und/oder Flusssollwerte der Pumpstation als Randbedingungen für das zweite Optimierungsverfahren (OPT2) genutzt werden.

3. Computerimplementiertes Verfahren nach einem der vorhergehenden Ansprüche, wobei die Betriebsparameter für die Pumpvorrichtungen derart ermittelt werden, dass die ressourcenoptimierten Druck- und Flusssollwerte der Pumpstation zum vorgegebenen Zeitpunkt erfüllt sind.

4. Computerimplementiertes Verfahren nach einem der vorhergehenden Ansprüche, wobei einzelne Pumpvorrichtungen der Pumpstation (Pi) in Abhängigkeit des ermittelten Druck- und Flusssollwerts dieser Pumpstation selektiert werden und lediglich für die selektierten Pumpvorrichtungen ressourcenoptimierte Betriebsparameter ermittelt werden.

5. Computerimplementiertes Verfahren nach einem der vorhergehenden Ansprüche, wobei die Verfahrensschritte (c) bis (e) für jede Pumpstation des Wasserversorgungssystems durchgeführt wird.

6. Computerimplementiertes Verfahren nach einem der vorhergehenden Ansprüche, wobei die Verfahrensschritte (b) bis (d) nach einem vorgegebenen Zeitschritt iteriert werden.

7. Computerimplementiertes Verfahren nach einem der vorhergehenden Ansprüche, wobei Pumpstationen des Wasserversorgungssystems im computergestützten Hydraulikmodell des Wasserversorgungssystems mittels Ersatzmodellen abgebildet werden.

8. Computerimplementiertes Verfahren nach einem der vorhergehenden Ansprüche, wobei das Pumpenmodell Pumpenkennlinien der Pumpvorrichtungen umfasst.

9. Computerimplementiertes Verfahren nach einem der vorhergehenden Ansprüche, wobei mittels eines zweiten Optimierungsverfahrens ein Effizienzwert der Pumpstation ermittelt wird.

10. Computerimplementiertes Verfahren nach einem der vorhergehenden Ansprüche, wobei das computergestützte Hydraulikmodell (HM) anhand des Effizienzwerts der Pumpstation aktualisiert und zur Ermittlung der ressourcenoptimierten Druck- und Flusssollwerte für die Pumpstationen des Wasserversorgungssystems genutzt wird.

11. Computerimplementiertes Verfahren nach einem der vorhergehenden Ansprüche, wobei die Pumpvorrichtungen der Pumpstation mittels der ressourcenoptimierten Betriebsparameter gesteuert wird (S6).

12. Vorrichtung (100) zur Steuerung einer Druck- und Flussverteilung eines Wasserversorgungssystems, das eine Vielzahl von Pumpstationen umfasst, umfassend
- eine erste Schnittstelle (102), die derart eingerichtet ist, ein computergestütztes Hydraulikmodell des Wasserversorgungssystems einzulesen, wobei das computergestützte Hydraulikmodell eingerichtet ist, eine zeitabhängige Druck- und Flussverteilung des Wasserversorgungssystems abzubilden,
- ein erstes Optimierungsmodul (102), das derart eingerichtet ist, ressourcenoptimierte Druck- und Flusssollwerte ((D1,F1),..., (Di,Fi),..., (Dn,Fn)) für die Pumpstationen (P1,..., Pn) des Wasserversorgungssystems für einen vorgegebenen Prognosezeitraum anhand des computergestützten Hydraulikmodells (HM) mittels eines ersten Optimierungsverfahrens (OPT1) zu ermitteln,
- eine zweite Schnittstelle (103), die derart eingerichtet ist, ein Pumpenmodell (PM) für eine Pumpstation einzulesen, wobei das Pumpenmodell eingerichtet ist, ein Betriebsverhalten von Pumpvorrichtungen der Pumpstation abzubilden,
- ein zweites Optimierungsmodul (104), das derart eingerichtet ist, ressourcenoptimierte Betriebsparameter für die Pumpvorrichtungen der Pumpstation (Pi) anhand des Pumpenmodells (PM) zu einem vorgegebenen Zeitpunkt mittels eines zweiten Optimierungsverfahrens (OPT2) in Abhängigkeit des Druck- und Flusssollwerts dieser Pumpstation für den vorgegebenen Zeitpunkt, zu ermitteln,
und
- ein Ausgabemodul (105), das derart eingerichtet ist, die ressourcenoptimierten Betriebsparameter (Ri) zum Steuern der Pumpvorrichtungen der Pumpstation auszugeben.

13. Computerprogrammprodukt, das direkt in einen programmierbaren Computer ladbar ist, umfassend Programmcodeteile, die dazu geeignet sind, die Schritte des Verfahrens nach einem der Ansprüche 1 bis 10 durchzuführen.
